# EUROPEAN PATENT APPLICATION

(11) **EP 1 793 508 A1**
(43) Date of publication of application: **06.06.2007**
(21) Application number: 06008236.9
(22) Date of filing: 20.04.2006
(51) Int. Cl.: H04B 3/54

(54) **Vehicle appliance control system**

(30) Priority: 30.11.2005 JP 2005345103
(71) Applicant: Pacific Industrial Co., Ltd., Ogaki-shi, Gifu-ken 503-8603 (JP)
(72) Inventor: Okubo, Youichi, Ogaki-shi Gifu-ken 503-8603 (JP); Kawase, Shinichi, Ogaki-shi Gifu-ken 503-8603 (JP); Tsujita, Yasuhisa, Ogaki-shi Gifu-ken 503-8603 (JP)
(74) Representative: Kramer - Barske - Schmidtchen

(57) **Abstract**

A vehicle appliance control system includes a main communication device (11) having a main modulator (14) superimposing, on electromagnetic waves, information including an operation command for operating an electrically-driven appliance (30, 31) and outputting the electromagnetic waves as surface waves of the components (21, 50, 51), and a plurality of secondary communication devices (121, 122, 123, 124) having respective secondary demodulators obtaining the information from the electromagnetic waves output by the main modulator (14) to have propagated along surfaces of the components (21, 50 51), the secondary communication devices (121, 122, 123, 124) being connected to the electrically drived appliances or the passive appliances (32, 33), being capable of communicating with the main communication device (11), and operating the electrically-driven appliances (30, 31) based on the operation command from the main communication device (11).

## Description

The present invention relates to a vehicle appliance control system provided on a vehicle.

Conventional vehicle appliance control systems comprise a secondary communication device driving electrically-driven appliances provided in a vehicle and a communication cable serving as a signal transmission path provided between the secondary communication device and a main communication device delivering an operation command to the secondary communication device such as coaxial cable, optical fiber cable or the like. JP-A-2000-69009 discloses one of such conventional vehicle appliance control systems.

The number of electrically-driven appliances provided on an automobile has recently been increasing with progress in the automobile technology. As a result, the number of communication cables connecting the secondary and main communication devices to each other has also been increasing. This causes an increase in the wiring space or in the weight of the automobile.

Therefore, an object of the present invention is to provide a vehicle appliance control system which can reduce the wiring space in the vehicle and the weight of the vehicle.

The present invention provides a vehicle appliance control system provided in a vehicle including an electrically-driven appliance, a passive appliance and a plurality of components, characterized by a main communication device having a main modulator superimposing, on electromagnetic waves, information including an operation command for operating the electrically-driven appliance and outputting the electromagnetic waves as surface waves of the components, and a plurality of secondary communication devices having respective secondary demodulators obtaining the information from the electromagnetic waves output by the main modulator to have propagated along surfaces of the components, the secondary communication devices being connected to the the electrically-driven appliances or passive appliances, being capable of communicating with the main communcation device, and operating the electrically-driven appliances based on the operation command from the main communication device.

According to the above-described arrangement, the main communication device superimposes information including an operation command on electromagnetic waves and outputs the electromagnetic waves. Each secondary communication device receives the electromagnetic waves thereby to obtain the information. Thus, since information is transmitted and received by a wireless manner, the wiring space in the vehicle and the weight of the vehicle can be reduced as compared with the conventional arrangement which uses a dedicated communication cable for transmission and reception. Furthermore, since the electromagnetic waves output from the main communication device are surface waves propagating on the surfaces of a plurality of components, power consumption upon output of information can be reduced as compared with the conventional wireless communication by radio waves. Additionally, since the electromagnetic waves output as the surface waves from the main communication device are difficult to be received by a secondary communication device provided on another vehicle, the reliability of communication can be improved.

In one embodiment, the system further comprises an secondary modulator provided in each secondary communication device for superimposing, on the electromagnetic waves, the information to be supplied to the main communication device and outputting the electromagnetic waves as the surface waves of the components and a main demodulator provided in the main communication device for obtaining the information from the electromagnetic waves output by the secondary modulator to have propagated along the surfaces of the components.

According to the above-described system, each secondary communication device superimposes information on electromagnetic waves and outputs the electromagnetic waves. The main communication device receives the electromagnetic waves thereby to obtain the information. Thus, since the information directed to the main communication device is transmitted and received by a wireless manner, the wiring space in the vehicle and the weight of the vehicle can be reduced as compared with the conventional arrangement which uses a dedicated communication cable for transmission and reception. Furthermore, since the electromagnetic waves output from each secondary communication device are surface waves propagating on the surfaces of a plurality of components, power consumption upon output of information can be reduced as compared with the conventional wireless communication by radio waves. Additionally, since the electromagnetic waves output as the surface waves from each secondary communication device are difficult to be received by a main communication device provided on another vehicle, the reliability of communication can be improved.

In another embodiment, a vehicle appliance control system provided in a vehicle including a battery having a positive pole, an electrically-driven appliance and a driven appliance, the system comprising a single main communication device having a main high-frequency current generating device capable of generating high-frequency current supplied to a power line connected to the positive pole of the battery and superimposing on the high-frequency current information containing an operation command for operating the electrically-driven appliance, and a plurality of secondary communication devices having respective secondary information extracting devices obtaining information from the high-frequency current flowing through the power line, the secondary communication devices connected to the electrically-driven appliance or the passive appliance, capable of communicating with the main communication device, and operating the electrically-driven appliance by power supply from the battery based on the operation command from the main communication device.

According to the above-described system, the main communication device superimposes information containing an operation command on high-frequency current, outputting the high-frequency current onto a power line. Each secondary communication device obtains the information from the high-frequency current flowing through the power line. Since the power line provided in the vehicle is used as a transmission path for the information containing the operation command, the system can reduce the wiring space in the vehicle and the weight of the vehicle as compared with the conventional arrangement which uses a dedicated communication cable for transmission and reception of information. Additionally, since the information output from the main communication device is not received by a secondary communication device provided on another vehicle, the reliability of communication can be improved.

In further another embodiment, the system further comprises an secondary high-frequency current generating device provided on each secondary communication device capable of generating high-frequency current supplied to the power line connected to the positive pole of the battery and superimposing on the high-frequency current information delivered to the main communication device, and a main information extracting device provided on the main communication device extracting the information from the high-frequency current flowing through the power line, thereby obtaining information containing the operation command.

According to the above-described system, each secondary communication device superimposes information on high-frequency current, outputting the high-frequency current onto a power line. The main communication device obtains the information from the high-frequency current flowing through the power line. Since the power line provided in the vehicle is used as a transmission path for the information directed to the communication device, the wiring space in the vehicle and the weight of the vehicle can be reduced as compared with the conventional arrangement which uses a dedicated communication cable for transmission and reception of information. Additionally, since the information output from each secondary communication device is not received by a secondary communication device provided on another vehicle, the reliability of communication can be improved.

In further another embodiment, the system further comprises an abnormal information transmitter provided in the secondary communication device for carrying out a process according to the operation command from the main communication device and thereafter superimposing, on the electromagnetic waves, information about presence of an abnormality of the electrically-driven appliances, transmitting the electromagnetic waves to the main communication device. Consequently, the main communication device can obtain information about presence or absence of an abnormality of the electrically-driven appliances and the information that the passive appliance has been operated.

In further another embodiment, the system further comprises electromagnetic wave intensity detectors provided in the secondary and main communication devices for detecting intensity of the electromagnetic waves output by the secondary and main modulators respectively and an output changing unit changing frequencies of electromagnetic waves output by the secondary and main modulators according to results of detection by the electromagnetic wave intensity detectors respectively. Consequently, the frequencies of electromagnetic waves output from each secondary modulator and the main modulator can be changed according to the intensity of electromagnetic waves output from the secondary and main modulators.

The invention will be described, merely by way of example, with reference to the accompanying drawings, in which:
FIG. 1 is a conceptual illustration of a vehicle appliance control system in accordance with a first embodiment of the present invention;
FIG. 2 is a block diagram showing an electrical arrangement of a main communication device and first and second secondary communication devices;
FIG. 3 is a block diagram showing an electrical arrangement of the main communication device and third and fourth secondary communication devices;
FIG. 4 is a block diagram showing an electrical arrangement of the vehicle appliance control system in accordance with a second embodiment of the present invention;
FIG. 5 is a block diagram showing an electrical arrangement of the main communication device and the secondary communication devices; and

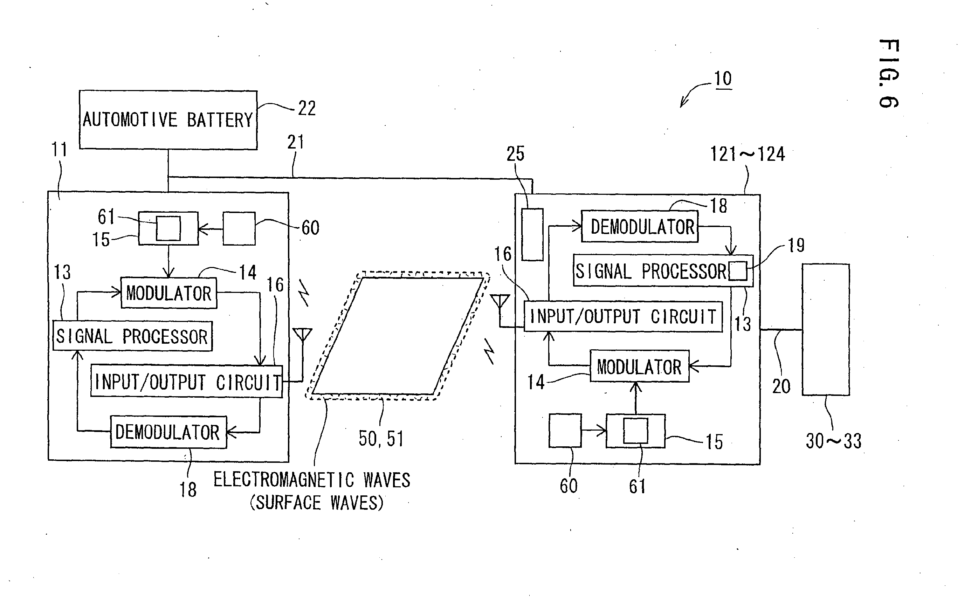

FIG. 6 is a conceptual illustration of the vehicle appliance control system in a modified form.

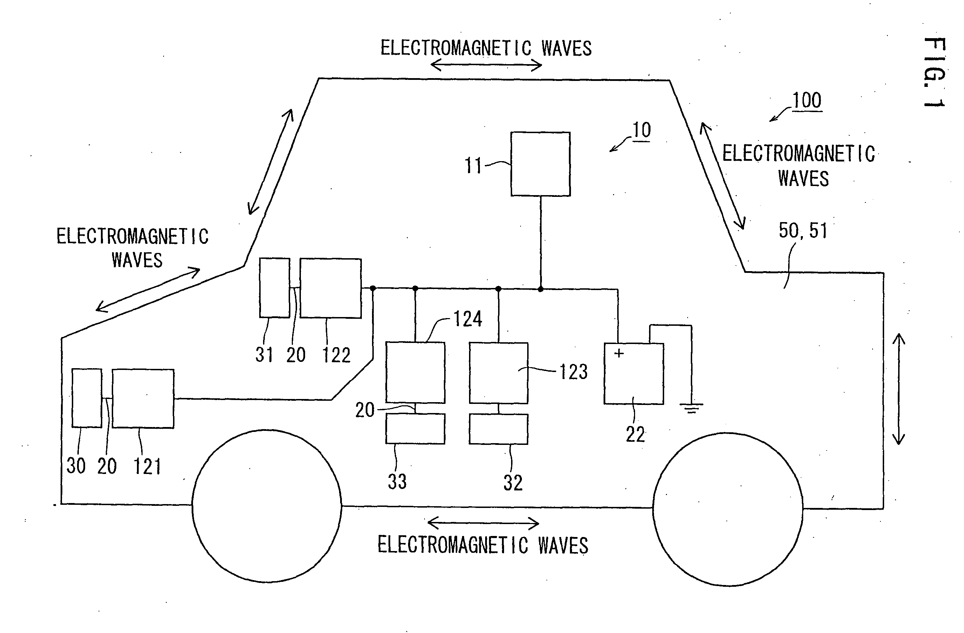

A first embodiment of the present invention will be described with reference to FIGS. 1 to 3. Referring to FIG. 1, reference numeral 10 designates a vehicle appliance control system of the embodiment. The system 10 constitutes an automotive local area network (LAN) provided in an automobile 100 serving as a vehicle in the invention. The system 10 comprises a single main communication device 11 and a plurality of, for example, four, secondary communication devices 121 through 124. These communication devices 11 and 121-124 are dispersed at predetermined positions in the automobile 100.

The secondary communication devices 121-124 include respective electrical electrical connectors 20 to which various appliances provided in the automobile 100 are connected. More specifically, for example, a headlight 30 serving as a lamp in the invention is connected to the electrical connector 20 of the first secondary communication device 121. A wiper motor 31 is connected to the electrical connector 20 of the second secondary communication device 122. A door sensor 32 for detecting an open or closed state of a door of the automobile 100 is connected to the electrical connector 20 of the third secondary communication device 123. A seatbelt sensor 33 for detecting a fastened or unfastened state of a seatbelt is connected to the electrical connector 20 of the fourth secondary communication device 124. Each of the headlight 30 and wiper motor 31 serves as an electrically-driven appliance in the invention. Each of the door sensor 32 and the seatbelt sensor 33 serves as a passive appliance in the invention. The first to fourth secondary communication devices 121-124 are assigned with respective identifiers (IDs) to discriminate one secondary communication device from the others.

The electrically-driven appliance should not be limited to the foregoing. For example, the electrically-driven appliance may include lights such as tail lights, an interior light, signal lights and the like, electric motors such as power window motors, door mirror motors and the like, air conditioner, car audio system or the like. Furthermore, the passive appliance should not be limited to the foregoing but may include a passenger sensor, a corner sensor, a tire air pressure sensor or the like.

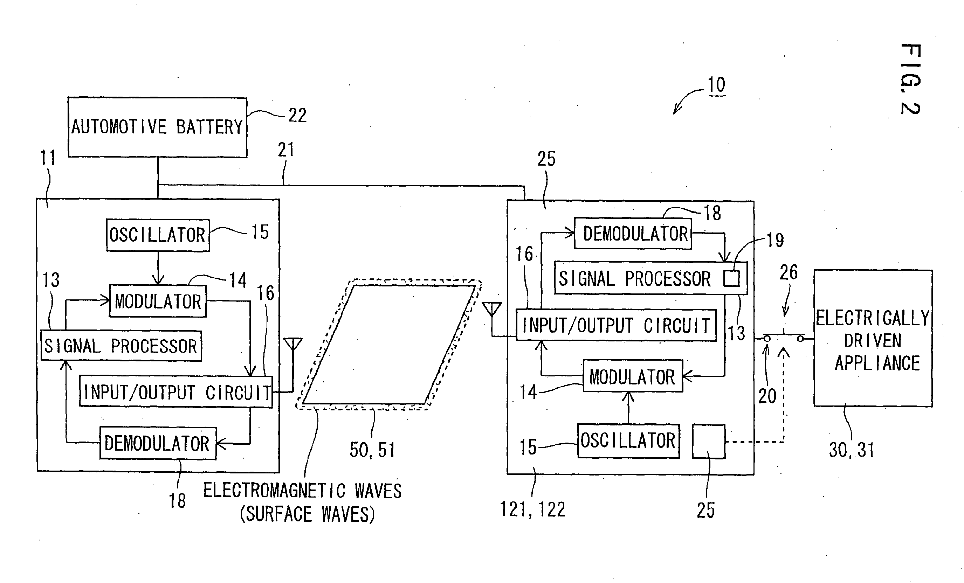

Referring to FIG. 2, the main communication device 11 includes a signal processor 13 as a major component. The signal processor 13 is provided with a central processing unit (CPU) executing various programs, a read only memory (ROM) storing the programs and a random access memory (RAM) temporarily storing data, none of which are shown. The signal processor 13 produces predetermined main communication data. Furthermore, the main communication device 11 is provided with a modulator 14 which takes in electromagnetic waves serving as carrier waves generated by an oscillator 15 and main communication data generated by the signal processor 13. The electromagnetic waves are modulated by the main communication data or the main communication data is superimposed on the electromagnetic waves. The modulated electromagnetic waves are delivered from an input/output circuit 16 as surface waves propagating along components of the automobile 100 such as body 50 and chassis 51. The modulator 14 of the main communication device 11 serves as a main modulator in the invention.

The input/output circuit 16 takes in the electromagnetic waves (surface waves) output by the secondary communication devices 121-124 and propagating along the surface of the automobile 100 (the surfaces of the body 50 and chassis 51). The demodulator 18 extracts secondary communication data from the electromagnetic waves and outputs the secondary communication data to the signal processor 13. The input/output circuit 16 may carry out, for example, an amplifying process and noise rejection process for the electromagnetic waves supplied into and out of the main communication device 11. The demodulator 18 of the main communication device 11 serves as a main demodulator in the invention.

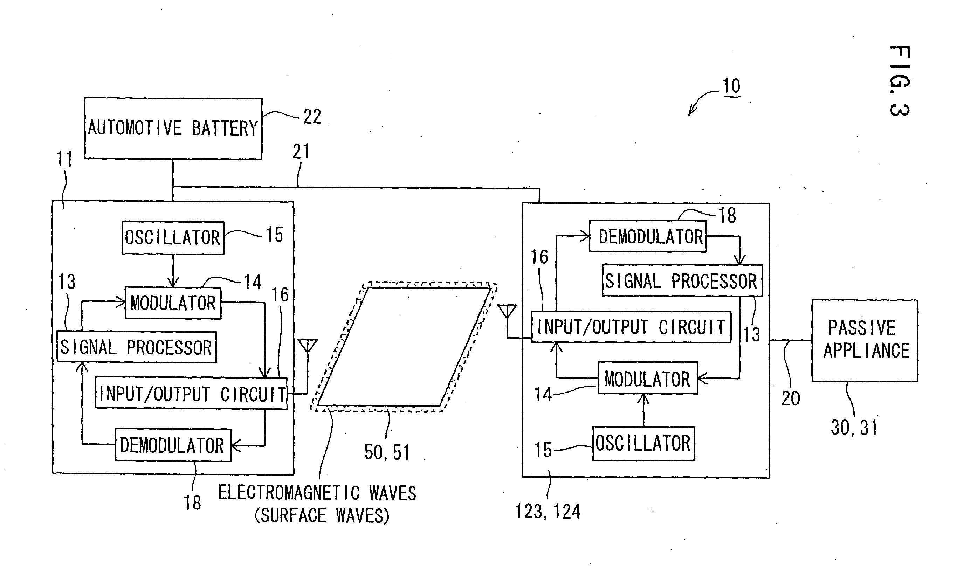

As shown in Fig. 2 and Fig. 3, each of the secondary communication devices 121-124 includes a signal processor 13, a modulator 14, an oscillator 15, an input/output circuit 16 and a demodulator 18 as the main communication device 11 does. Each signal processor 13 of the secondary communicatoin devices 121-124 includes a ROM (not shown) storing data of a specific identifier (ID). The modulator 14 of each of the secondary communication devices 121-124 serves as a secondary modulator in the invention, whereas the demodulator 18 serves as a secondary demodulator in the invention.

The signal processor 13 of the first secondary communication device 121 connected to the headlight 30 is provided with a rewritable memory 19, which stores data of a normal current value of the headlight 30, as shown in FIG. 2. In the same manner, the second secondary communication device 122 connected to the wiper motor 31 includes a rewritable memory 19 storing data of a normal current value of the wiper motor 31. The aforesaid normal current values are individually written onto the respective memories 19 by data transmission as carrier waves of the electromagnetic waves from the main communication device 11. This eliminates manufacture of dedicated secondary communication devices storing different contents of the memories 19 according to the types of the electrically-driven appliances. In other words, one type of secondary communication device can be used commonly for a plurality of types of electrically-driven appliances, whereupon the versatility of secondary communication device can be improved.

The main and secondary communication devices 11 and 121-124 are connected via a power cable 21 to an external power supply such as an automotive battery 22. When a power switch (not shown) is turned on, electric power is supplied from the automotive battery 22 to the main and secondary communication devices 11 and 121-124, so that the devices are activated. Furthermore, electric power is supplied from the secondary communication devices 121-124 via the electrical connectors 20 to the vehicle appliances 30-33 connected to the secondary communication devices 121-124, respectively. The power cable 21 and each electrical connector 20 serve as a power supply line in the invention.

A normally on-state cutoff switch 26 is provided in the middle of the electrical connector 20 for supplying electric power from the first and second secondary communication devices 121 and 122 to the headlight 30 and wiper motor 31 respectively. Furthermore, each of the first and second secondary communication devices 121 and 122 is provided with a cutoff circuit 25 for changing the cutoff switch 26 to an off-state when each of the power supply lines to the headlight 30 and the wiper motor 31 is short-circuited. Thus, even when the power supply line is short-circuited, the headlight 30 or the wiper motor 31 can be prevented from failure due to overcurrent.

The operation of the vehicle appliance control system 10 will now be described. For example, when the driver turns on an operation switch of the wiper of the automobile 100 provided with the vehicle appliance control system 10, the signal processor 13 of the main communication device 11 obtains information about the operation of the switch. The signal processor 13 then generates main communication data including the ID of the second secondary communication device 122 to which the wiper motor 31 is connected and starting command for the wiper motor 31, delivering the main communication data to the modulator 14. The main communication data serves as information including an operation command in the invention. The modulator 14 modulates the electromagnetic waves taken in from the oscillator 15 on the basis of the main communication data and outputs the waves to the input/output circuit 16. The input/output circuit 16 carries out an amplifying process and a noise rejection process for the electromagnetic waves and thereafter delivers the processed electromagnetic waves to the body 50 of the automobile 100, for example.

The electromagnetic waves delivered to the body 50 propagate as surface waves along the surfaces of the body 50 and chassis 51, reaching various parts of the automobile 100. The electromagnetic waves are then taken in by the input/output circuits 16 of the secondary communication devices 121-124. Each input/output circuit 16 carries out an amplifying process and a noise reducing process for the taken-in electromagnetic waves and thereafter delivers the processed electromagnetic waves to the demodulator 18. The demodulator 18 demodulates the electromagnetic waves, thereby extracting the main communication data. The extracted main communication data is taken in by the signal processor 13 of each of the secondary communication devices 121-124. The signal processor 13 determines whether the ID contained in the main communication data corresponds with ID stored in the ROM of its own. When the main communication device 11 has transmitted the main communication data for operating the wiper, the signal processor 13 of the second secondary communication device 122 determines that the ID contained in the main communication data corresponds with the ID stored in the ROM of its own. The wiper motor 31 is then driven in response to the starting command contained in the main communication data, whereby the wiper is operated.

On the other hand, the secondary communication devices 121, 123 and 124 other than the second secondary communication device 122 each determine that the ID contained in the main communication data does not correspond with the ID stored in the ROM of its own, ignoring the starting command contained in the main communication data. As a result, an erroneous activation of the head light 30 and wiper motor 31 can be completely prevented.

When the wiper is operated in response to the starting command, the signal processor 13 of the second secondary communication device 122 measures current flowing into the wiper motor 31, determining whether the measured current value is within a range of normal current value which is stored in the memory 19 of the signal processor 13. When the measured current value is within the normal current value range, the signal processor 13 determines that the wiper motor 31 is normal. When out of the normal current value range, the signal processor 13 determines that the wiper motor 31 is abnormal. More specifically, when the measured current value is smaller than a lower limit of the normal current value, the signal processor 13 determines that a break has occurred. When the measured current value is larger than an upper limit of the normal current value, the signal processor 13 determines that a short circuit has occurred. When the signal processor 13 determines that a short circuit has occurred, the second secondary communication device 122 operates the cutoff circuit 25 (see FIG. 2) so that the cutoff switch 26 is turned off to stop power supply to the wiper motor 31. The signal processor 13 serves as an abnormality determining unit in the invention.

The signal processor 13 of the second secondary communication device 122 generates secondary communication data containing the aforesaid result of abnormality determination and the ID, delivering the secondary communication data to the modulator 14. The modulator 14 modulates the electromagnetic waves as carrier waves taken from the oscillator 15 and modulates the electromagnetic waves on the basis of the secondary communication data or superimposes the secondary communication data on the electromagnetic waves. The modulator 14 then delivers the electromagnetic waves to the input/output circuit 16. The input/output circuit 16 carries out an amplifying process and noise rejection process for the electromagnetic waves, delivering the processed electromagnetic waves to the body 50. The aforesaid secondary communication data serves as information to the main communication device in the invention. The signal processor 13 and the modulator 14 of the secondary communication device 122 constitute an abnormality information transmitting unit in the embodiment.

The electromagnetic waves delivered from the second secondary communication device 122 to the body 50 propagate as surface waves along the surfaces of the components of the automobile 100 such as the body 50, chassis 51 and the like, reaching various parts of the automobile 100. The electromagnetic waves are then taken in by the main communication device 11. The electromagnetic waves taken-in by the main communication device 11 are demodulated by the demodulator 18, whereby the secondary communication data is extracted. The extracted secondary communication data is taken in by the signal processor 13. The signal processor 13 obtains information about presence or absence of abnormality in the wiper motor 31 and information as to whether the wiper motor 31 has normally been operated, from the result of abnormality determination contained in the secondary communication data. A process for the operation of the headlight 30 is the same as described above.

The main communication device 11 generates main communication data toward the third secondary communication device 123 at predetermined intervals for the purpose of confirming an on-off state of the door sensor 32. More specifically, in the same manner as in the wiper starting command, the main communication device 11 produces main communication data containing the ID of the third secondary communication device 123 and on-off state confirmation command, superimposing the main communication data on electromagnetic waves. The main communication device 11 then delivers the main communication data to the body 50. The electromagnetic waves propagate as surface waves along the surfaces of the body 50 and chassis 51, reaching various parts of the automobile 100. The electromagnetic waves are then taken in by the secondary communication devices 121-124. However, only the signal processor 13 of the third secondary communication device 123 obtains the information about on-off state of the door sensor 32 in response to the on-off state confirmation command of the main communication data extracted from the electromagnetic waves. The signal processor 13 of the third secondary communication device 123 produces secondary communication data containing the information about on-off state of the door sensor 32. The signal processor 13 then superimposes the secondary communication data on electromagnetic waves and delivers the electromagnetic waves to the body 50. The main communication device 11 takes in the electromagnetic waves delivered from the third secondary communication device 123 and propagated along the surfaces of the body 50 and chassis 51, extracting the secondary communication data. The signal processor 13 of the main communication device 11 obtains information about an open or closed state of the automotive door, based on the information about on-off state of the door sensor 32 contained in the extracted secondary communication data. For example, when the door is open, a predetermined warning lamp is activated. When the on-off state of the seatbelt sensor 33 is confirmed, the same process as described above is carried out.

According to the foregoing embodiment, communication data is superimposed on the electromagnetic waves. The electromagnetic waves are then transmitted and received between the main communication device 11 and each of the secondary communication devices 121-124. In other words, wireless communication is carried out between the main communication device 11 and each of the secondary communication devices 121-124. Accordingly, the above-described system can reduce the wiring space in the automobile 100 and the weight of the automobile 100 as compared with the conventional arrangement which uses a dedicated communication cable for transmission and reception. Furthermore, since the electromagnetic waves output from the main or secondary communication devices 11 and 121-124 are surface waves propagating on the surfaces of the components (the body 50, chassis 51 or the like) of the automobile 100, the above-described system can reduce power consumption upon output of information as compared with the conventional wireless communication by radio waves. Additionally, since the electromagnetic waves output as the surface waves from the main communication devices 11 or each of the secondary communication devices 121-124 are difficult to be received by a secondary communication device provided on another automobile, the reliability of communication can be improved.

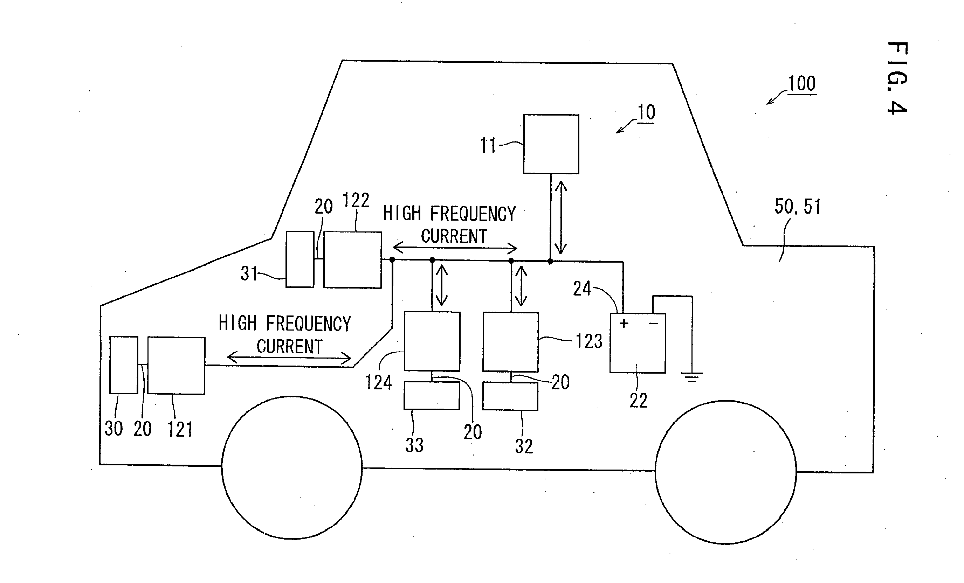

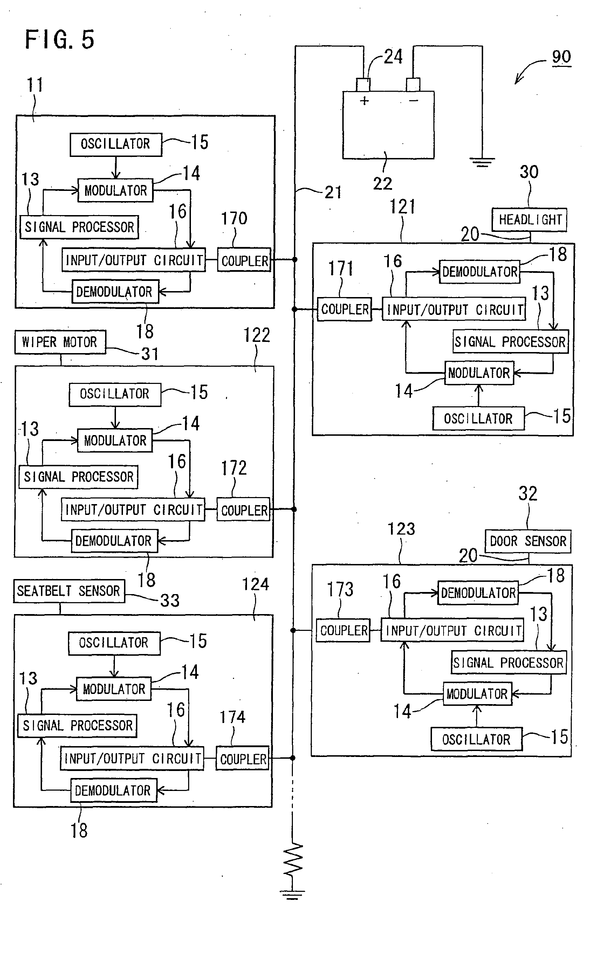

FIGS. 4 and 5 illustrate a second embodiment of the invention. The second embodiment differs from the first embodiment mainly in the use of a power cable 21 as an information transmission path. Since the other arrangement in the second embodiment is the same as that in the first embodiment, identical or similar parts are labeled by the same reference symbols as those in the first embodiment and duplication of description will be eliminated.

Referring to FIGS. 4 and 5, the vehicle appliance control system 90 of the second embodiment comprises the main communication device 11, a plurality of secondary communication devices 121-124 and couplers 170-174 provided with the communication devices, 11 and 121-124. The couplers 170-174 electrically couples the power cable 21 (serving as a power line in the invention) connected to the positive pole 24 of the automotive battery 22 and supplying electric power to the electrically-driven appliance (the headlight 30, wiper motor 31 or the like) and each of the input/output circuits 16 of main and secondary communication devices 11 and 121-124 therebetween by making use of electromagnetic induction. More specifically, the couplers 170-174 comprise induction coils (not shown) as a major component and supplies, by electromagnetic induction, electric power supplied from the battery 22 through the power cable 21 into the main and secondary communication devices 11 and 121-124, the headlight 30 and the wiper motor 31 latter two of which serve as the electrically-driven appliances. Furthermore, the couplers 170-174 receive with the induction coils the electromagnetic waves from the input/output circuits 16 of the communication devices 11 and 121-124 and generate high-frequency current in the power cable 21 by the electromagnetic induction.

The modulator 14 of the main communication device 11 and the coupler 170 constitute a main high-frequency current generating device in the invention. The modulators 14 of the secondary communication devices 121-124 and the couplers 171-174 constitute secondary high-frequency current generating devices in the invention respectively. Furthermore, the demodulator 18 of the main communication device 11 and the coupler 170 constitute a main information extracting device in the invention. The demodulators 18 of the secondary communication devices 121-124 and the couplers 171-174 constitute secondary information extracting devices in the invention respectively.

The system 90 operates as follows. When the driver turns on the wiper switch in the automobile 100 provided with the system 90, the signal processor 13 of the main communication device 11 obtains information about the operation of the wiper switch. The signal processor 13 then produces main communication data containing the ID of the second secondary communication device 122 to which the wiper motor 31 is connected and a starting command for the wiper motor 31 in the same manner as in the first embodiment. The signal processor 13 superimposes the main communication data on the electromagnetic waves and then delivers the electromagnetic waves to the input/output circuit 16. The input/output circuit 16 carries out an amplifying process and a noise rejection process for the electromagnetic waves and then delivers the processed electromagnetic waves to the coupler 170.

In the coupler 170, the induction coil thereof having received the electromagnetic waves generates high-frequency current. The high-frequency current flows into the power cable 21 to be supplied to the couplers 171-174 of the secondary communication devices 121-124. The couplers 171-174 deliver electromagnetic waves according to the high-frequency currents. The electromagnetic waves are supplied to the input/output circuits 16 of the secondary communication devices 121-124. The main communication data is extracted from the electromagnetic waves in the same manner as in the first embodiment. The extracted main communication data is supplied into the signal processors 13 of the secondary communication devices 121-124. Each signal processor 13 determines whether the ID contained in the main communication data corresponds with the ID stored on the ROM. When the main communication data for operating the wiper has been transmitted from the main communication device 11, the signal processor 13 of the second secondary communication device 122 determines that the ID contained in the main communication data corresponds with the ID stored on the ROM. The wiper motor 31 is driven in response to the starting command contained in the main communication data, so that the wiper is operated.

On the other hand, the secondary communication devices 121, 123 and 124 other than the second secondary communication device 122 each determine that the ID contained in the main communication data does not correspond with the ID stored in the ROM of its own, ignoring the starting command contained in the main communication data. As a result, an erroneous activation of the headlight 30 and wiper motor 31 can completely be prevented.

When the wiper is operated in response to the starting command, the signal processor 13 of the second secondary communication device 122 measures current flowing into the wiper motor 31, determining whether the measured current value is within a range of normal current value, in the same manner as in the first embodiment. When determining that a short circuit has occurred, the second secondary communication device 122 operates the cutoff circuit 25 (see FIG. 2) so that the cutoff switch 26 is turned off to stop power supply to the wiper motor 31.

The signal processor 13 of the second secondary communication device 122 generates secondary communication data containing the aforesaid result of abnormality determination and the ID, superimposing the secondary communication data on the electromagnetic waves and delivering the electromagnetic waves to the input/output circuit 16 in the same manner as in the first embodiment. The input/output circuit 16 carries out an amplifying process and a noise rejection process for the electromagnetic waves, delivering the processed electromagnetic waves to the coupler 172. The induction coil of the coupler 172 having received the electromagnetic waves generates high-frequency current, which flows into the power cable 21. The signal processor 13, the modulator 14 and the coupler 172 of the secondary communication device 122 constitute an abnormality information transmitting unit in the invention.

The high-frequency current generated by the coupler 172 of the second secondary communication device 122 is supplied via the power cable 21 into the coupler 170 of the main communication device 11. The coupler 170 outputs electromagnetic waves according to the supplied high-frequency current. The generated electromagnetic waves are supplied to the input/output circuit 16 of the main communication device 11. The demodulator 18 of the main communication device 11 then extracts secondary communication data from the supplied electromagnetic waves. The signal processor 13 obtains, from the result of abnormality detection contained in the secondary communication data, information about presence or absence of abnormality in the wiper motor 31 and information as to whether the wiper motor 31 has normally been operated. A process for the operation of the headlight 30 is the same as described above.

The main communication device 11 generates main communication data toward the third secondary communication device 123 at predetermined intervals for the purpose of confirming an on-off state of the door sensor 32, for example. More specifically, in the same manner as in the wiper starting command, the main communication device 11 produces main communication data containing the ID of the third secondary communication device 123 and on-off state confirmation command for the door sensor 32, superimposing the main communication data on electromagnetic waves. The main communication device 11 then delivers the main communication data to the coupler 173. In the coupler 173, the induction coil thereof having received the electromagnetic waves generates high-frequency current. The high-frequency current flows into the power cable 21 to be supplied to the couplers 171-174 of the secondary communication devices 121-124. The couplers 171-174 generate the electromagnetic waves, thereafter being supplied to the input/output circuits 16 of the secondary communication devices 121-124. However, only the signal processor 13 of the third secondary communication device 123 obtains the information about on-off state of the door sensor 32 in response to the on-off state confirmation command of the main communication data. The signal processor 13 of the third secondary communication device 123 produces secondary communication data containing the information about on-off state of the door sensor 32. The signal processor 13 then superimposes the secondary communication data on electromagnetic waves and delivers the electromagnetic waves to the coupler 173. The coupler 173 generates high-frequency current from the electromagnetic waves by electromagnetic induction, delivering the high-frequency current to the power cable 21. The high-frequency current is supplied via the power cable 21 into the coupler 170 of the main communication device 11. The coupler 170 converts the supplied high-frequency current to electromagnetic waves and extracts the secondary communication data from the electromagnetic waves. The signal processor 13 of the main communication device 11 obtains information about an open or closed state of the door based on the information about the on-off state of the door sensor 32 contained in the extracted secondary communication data. For example, when the door is open, a predetermined warning lamp is activated. When the on-off state of the seatbelt sensor 33 is confirmed, the same process as described above is carried out.

According to the second embodiment, the main communication device 11 superimposes communication data containing an operation command on the high-frequency current, delivering the high-frequency current to the power cable 21. The secondary communication devices 121-124 obtains the communication data from the high-frequency current flowing through the power cable 21. Since the power cable 21 provided in the automobile 100 is used as a transmission path for the communication data, the vehicle appliance control system can reduce the wiring space in the vehicle and the weight of the vehicle as compared with the conventional arrangement which uses a dedicated communication cable for transmission and reception of information. Additionally, since the communication data output from the main communication device 11 is not received by the other secondary communication devices 121-124 of the automobile 100, the reliability of communication can be improved.

The invention should not be limited to the above-described embodiments, but the technical scope of the invention encompasses the following modified forms of the embodiments. The invention may further be practiced without departing from the gist thereof.
(1) Electric characteristics of the body 50 and chassis 51 of the automobile 100 are not constant but can change according to the circumstances. For example, an easiness of electricity to flow differs between the conditions where it is dry and where it is wet. The easiness can also vary depending upon the temperature. Accordingly, for example, the intensity of electromagnetic waves delivered by the main and secondary communication devices 11 and 121-124 is detected by field intensity detectors 60 (serving as electric field intensity detectors) provided in the respective main and secondary communication devices 11 and 121-124. Results of detection are fed back to the output changing units 61 of the main and secondary communication devices 11 and 121-124. Frequencies of electromagnetic waves delivered by the modulators 14 may be changed based on the result of detection by the output changing units 61 respectively. Consequently, communication can be stabilized irrespective of conditions of the body 50 and the chassis 51.
   Each output changing unit 61 may be arranged to select an optimum frequency according to the electric field intensity from among a predetermined frequency range or a plurality of frequencies. The main and secondary communication devices 11 and 121-124 are arranged to be capable of receiving electromagnetic waves covering the entire frequency.
(2) In the first embodiment, the first and second secondary communication devices 121 and 122 measure current values of the electrically-driven appliances such as the headlight 30, the wiper motor 31 and the like. The abnormality of the appliances is determined on the basis of the measured current values. The results of determination are delivered as secondary communication data. However, the measured current values may directly be delivered as the secondary communication data, instead. In this case, the electrically-driven appliances can be maintained and prevented from breakage when the main communication device 11 is arranged to analyze each measured current value and estimate occurrence of abnormality in the future such as break, short circuit or the like in the power line.
(3) In the first embodiment, the electromagnetic waves delivered from each of the communication devices 11 and 121-124 propagate along the surfaces of the body 50 and chassis 51. However, the electromagnetic waves may propagate along the surface of the power cable 21 so that each of the communication devices 11 and 121-124 obtains communication data from the surface waves, instead.
(4) In the second embodiment, the communication devices 11 and 121-124 convert the high-frequency current flowing through the power cable 21 to the electromagnetic waves by the respective couplers 170-174, thereby taking the electromagnetic waves in. However, when the high-frequency current flows, the communication devices 11 and 121-124 may receive electromagnetic waves generated near the surface of the power cable 21 and obtain communication data from the electromagnetic waves.
(5) A vehicle on which the vehicle appliance control system 10 or 90 is provided needs not be limited to the four-wheel automobile 100. For example, the vehicle may include motorcycles, industrial vehicles such as forklifts or aircrafts.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle appliance control system provided in a vehicle (100) including an electrically-driven appliance (30, 31), a passive appliance (32, 33) and a plurality of components (21, 50, 51), **characterized by**:
a main communication device (11) having a main modulator (14) superimposing, on electromagnetic waves, information including an operation command for operating the electrically-driven appliance (30, 31) and outputting the electromagnetic waves as surface waves of the components (21, 50, 51); and
a plurality of secondary communication devices (121, 122, 123, 124) having respective secondary demodulators obtaining the information from the electromagnetic waves output by the main modulator (14) to have propagated along surfaces of the components (21, 50, 51), the secondary communication devices (121, 122, 123, 124) being connected to the passive appliances (32, 33) or operating the electrically-driven appliances (30, 31) respectively based on the operation command.

2. The system according to claim 1, **characterized in that** the electrically-driven appliance includes a light (30) and a wiper motor (31) and the passive appliance includes an opening/closing sensor (32) of a door.

3. The system according to claims 1 or 2, further **characterized by** a cutoff switch (26) provided on the way to a power supply line (20, 21) to the electrically-driven appliances (30, 31) so as normally to be maintained in an on state and a cutoff circuit (25) changing the cutoff switch (26) to an off state when the power supply line (20, 21) is short circuited.

4. The system according to any one of claims 1 to 3, further **characterized by** an secondary modulator (14) provided in each secondary communication device (121, 122, 123, 124) for superimposing, on the electromagnetic waves, the information to be supplied to the main communication device and outputting the electromagnetic waves as the surface waves of the components (21, 50, 51) and a main demodulator (18) provided in the main communication device (11) for obtaining the information from the electromagnetic waves output by the main modulator (14) to have propagated along the surfaces of the components (21, 50 51).

5. The system according to claim 4, further **characterized by** an abnormal information transmitter (13, 14) provided in the secondary communication device (121, 122) for carrying out a process according to the operation command from the main communication device (11) and thereafter superimposing, on the electromagnetic waves, information about presence or absence of an abnormality of the electrically-driven appliances (30, 31), transmitting the electromagnetic waves to the main communication device (11).

6. The system according to claim 5, further **characterized by** an abnormality determining unit provided in the secondary communication device (121, 122) for determining whether the electrically-driven appliances (30, 31) are in an abnormal condition, based on information about a normal current value serving as a reference for determination of an abnormal condition transmitted on the electromagnetic waves from the main communication device (11) and a current flowing through the electrically-driven appliance (30, 31).

7. The system according to any one of claims 4 to 6, **characterized in that** the secondary communication device (123, 124) is arranged to superimpose, on the electromagnetic waves, information that the passive appliance (32, 33) has been operated and transmit the electromagnetic waves to the main communication device (11).

8. The system according to any one of claims 4 to 7, further **characterized by** electromagnetic wave intensity detectors (60) provided in the secondary and main communication devices (121, 122, 123, 124; and 11) for detecting intensity of the electromagnetic waves output by the secondary and main modulators (14) respectively and an output changing unit (61) changing frequencies of electromagnetic waves output by the secondary and main modulators (14) according to results of detection by the electromagnetic wave intensity detectors (60) respectively.

9. A vehicle appliance control system provided in a vehicle (100) including a battery (22) having a positive pole (24), an electrically-driven appliance (30, 31) and a passive appliance (32, 33), **characterized by**:
a single main communication device (11) having a main high-frequency current generating device (14, 170) capable of generating high-frequency current supplied to a power line (21) connected to the positive pole (24) of the battery (22) and superimposing on the high-frequency current information containing an operation command for operating the electrically-driven appliance (30, 31); and
a plurality of secondary communication devices (121, 122, 123, 124) having respective secondary information extracting devices (18, 171, 172, 173, 174) obtaining information from the high-frequency current flowing through the power line (21), the secondary communication devices (121, 122, 123, 124) operating the electrically-driven appliance (30, 31) connected to the passive appliance (32, 33), by power supply from the battery (22) based on the operation command.

10. The system according to claim 9, further **characterized by** an secondary high-frequency current generating device (14, 171, 172, 173, 174) provided on each secondary communication device (121, 122, 123, 124) capable of generating high-frequency current supplied to the power line (21) connected to the positive pole (24) of the battery (22) and superimposing on the high-frequency current information delivered to the main communication device (11) and a main information extracting device (18, 170) extracting the information from the high-frequency current flowing through the power line (21), thereby obtaining information containing the operation command.

11. The system according to claim 10, **characterized in that** the electrically-driven appliance (30, 31) includes a lamp (30) and a wiper motor (31) and which further comprises abnormality information transmitting unit provided on each secondary communication device (121, 122) for operating the electrically-driven appliance (30, 31) in compliance with the operation command delivered from the main communication device (11) and thereafter transmitting to the main communication device (11) information about presence or absence of abnormality in the electrically-driven appliance (30, 31).

12. The system according to claim 11, further **characterized by** an abnormality determining unit (13) provided in the secondary communication device (121, 122) for determining presence or absence of abnormality of the electrically-driven appliance based on information about a normal current value transmitted on the high-frequency current and serving as a criterion for presence or absence of abnormality and a value of current flowing into the electrically-driven appliance (30, 31).

13. The system according to claim 10, **characterized in that** the passive appliance includes a door sensor (32) for detecting an open or closed state of a door and one (123) of the secondary sensors (121, 122, 123, 124) transmits to the main communication device (11) information about the open or closed state of the door based on a result of detection by the door sensor (32).

14. The system according to any one of claims 1 to 13, **characterized in that** the information includes identifiers for identifying the respective secondary communication devices (121, 122, 123, 124).

## Amended claims

### Amended claims in accordance with Rule 86(2) EPC.

**1.** A vehicle appliance control system provided in a vehicle (100) including an electrically-driven appliance (30, 31), a passive appliance (32, 33) and a plurality of components (21, 50, 51), comprising :
a main communication device (11) and
a plurality of secondary communication devices (121, 122, 123,124) the secondary communication, devices (121, 122, 123, 124) being connected to the passive appliances (32, 33) or operating the electrically-driven appliances (30, 31) respectively based on an operation command, **characterized in that** the main communication device (11) has a main modulator (14) superimposing, on electromagnetic waves, information including the operation command for operating the electrically-driven appliance (30, 31) and outputs the electromagnetic waves as surface waves of the components (21, 50, 51) ; and the plurality of secondary communication devices (124, 122, 123, 124) have respective secondary demodulators obtaining the information from the electromagnetic waves output by the main modulator (14) to have propagated along surfaces of the components (21, 50, 51).

**2.** The system according to claim 1, **characterized in that** the electrically-driven appliance includes a light (30) and a wiper motor (31) and the passive appliance includes an opening/closing sensor (32) of a door.

**3.** The system according to claims 1 or 2, further **characterized by** a cutoff switch (26) provided on the way to a power supply line (20, 21) to the electrically-driven appliances (30, 31) so as normally to be maintained in an on state and a cutoff circuit (25) changing the cutoff switch (26) to an off state when the power supply line (20, 21) is short circuited.

**4.** The system according to any one of claims 1 to 3, further **characterized by** an secondary modulator (14) provided in each secondary communication device (121, 122, 123, 124) for superimposing, on the electromagnetic waves, the information to be supplied to the main communication device and outputting the electromagnetic waves as the surface waves of the components (21, 50, 51) and a main demodulator (18) provided in the main communication device (11) for obtaining the information from the electromagnetic waves output by the main modulator (14) to have propagated along the surfaces of the components (21, 50 51).

**5.** The system according to claim 4, further **characterized by** an abnormal information transmitter (13, 14) provided in the secondary communication device (121, 122) for carrying out a process according to the operation command from the main communication device (11) and thereafter superimposing, on the electromagnetic waves, information about presence or absence of an abnormality of the electrically-driven appliances (30, 31), transmitting the electromagnetic waves to the main communication device (11).

**6.** The system according to claim 5, further **characterized by** an abnormality determining unit provided in the secondary communication device (121, 122) for determining whether the electrically-driven appliances (30, 31) are in an abnormal condition, based on information about a normal current value serving as a reference for determination of an abnormal condition transmitted on the electromagnetic waves from the main communication device (11) and a current flowing through the electrically-driven appliance (30, 31).

**7.** The system according to any one of claims 4 to 6, **characterized in that** the secondary communication device (123, 124) is arranged to superimpose, on the electromagnetic waves, information that the passive appliance (32, 33) has been operated and transmit the electromagnetic waves to the main communication device (11).

**8.** The system according to any one of claims 4 to 7, further **characterized by** electromagnetic wave intensity detectors (60) provided in the secondary and main communication devices (121, 122, 123, 124; and 11) for detecting intensity of the electromagnetic waves output by the secondary and main modulators (14) respectively and an output changing unit (61) changing frequencies of electromagnetic waves output by the secondary and main modulators (14) according to results of detection by the electromagnetic wave intensity detectors (60) respectively.
